(19) Europäisches Patentamt
European Patent Office
Office européen des brevets

(11) **EP 1 716 963 B1**

(12) **EUROPÄISCHE PATENTSCHRIFT**

(45) Veröffentlichungstag und Bekanntmachung des Hinweises auf die Patenterteilung:
**22.10.2008 Patentblatt 2008/43**

(51) Int Cl.:
**B23K 26/06** (2006.01)

(21) Anmeldenummer: **06090063.6**

(22) Anmeldetag: **26.04.2006**

(54) **Optische Anordnung für die Remote-Laser-Materialbearbeitung zur Erzeugung eines dreidimensionalen Arbeitsraumes**

Optical arrangement for remote laser machining which creates a 3D working area

Optiques pour le le travail à distance au laser permettant la création d'un espace de travail 3D

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.04.2005 EP 05090117**
**10.06.2005 EP 05090169**

(43) Veröffentlichungstag der Anmeldung:
**02.11.2006 Patentblatt 2006/44**

(73) Patentinhaber: **Highyag Lasertechnologie GmbH 14532 Stahnsdorf (DE)**

(72) Erfinder:
• **Füssler, Sven**
**14469 Potsdam (DE)**
• **Köhler, Gunnar**
**14471 Potsdam (DE)**
• **Lindner, Sven, Dr,**
**14467 Potsdam (DE)**
• **Niedrig, Roman, Dr.**
**12167 Berlin (DE)**
• **Wedel, Björn, Dr.**
**12205 Berlin (DE)**

(74) Vertreter: **Boeckh, Tobias HERTIN Anwaltssozietät Kurfürstendamm 54/55 10707 Berlin (DE)**

(56) Entgegenhaltungen:
**US-A- 4 997 250**

• **PATENT ABSTRACTS OF JAPAN Bd. 1999, Nr. 08, 30. Juni 1999 (1999-06-30) -& JP 11 058059 A (AMADA CO LTD), 2. März 1999 (1999-03-02)**

**Beschreibung**

Die Erfindung betrifft eine Vorrichtung und ein Verfahren zur Remote-Laser-Materialbearbeitung.

Vorrichtungen zum schnellen Positionieren eines fokussierten Laserstrahls sind beispielsweise von Beschriftungssystemen bekannt. Der Grundaufbau besteht aus einer Laserquelle, einem Linsensystem zur Strahlaufweitung und Kollimation des Laserstrahls, und einem Ablenksystem (dem eigentlichen sogenannten Scanner), bestehend aus zwei jeweils um eine Achse drehbar gelagerten Spiegeln, deren Achsen um 90° zueinander verkippt sind und mit einem Galvanometerantrieb versehen sind, so dass der Strahl in zwei Richtungen um einen einstellbaren Winkel verkippt werden kann. Unmittelbar nach dem SpiegelAblenksystem ist das Fokussierobjektiv angeordnet, welches den Laserstrahl in der Brennebene fokussiert. Durch die Winkelverkippung, die der kollimierte Laserstrahl durch die beiden Spiegel in zwei Achsen erfahren kann, spannt der fokussierte Strahl in der Brennebene des Fokussierobjektivs eine zweidimensionale Fläche auf, auf der der Strahl beliebig und schnell positioniert werden kann. Als Fokussierobjektiv kommen hier meist sogenannte f-Theta-Planfeldobjektive zum Einsatz, bei denen die Bildfeldwölbung nahezu auskorrigiert ist, so dass die aufgespannte Fläche zur Ebene wird; außerdem besitzen diese Objektive eine spezielle Art der Verzeichnung, bei der die Bildpunkthöhe exakt proportional zum Winkel,des einfallenden Strahls ist. Die Anwendung beschränkt sich üblicherweise auf kompakte Lasersysteme mit geringer bis mittlerer Leistung mit hoher Strahlqualität, um einen sehr kleinen Laserfleck zu erzeugen. In der Kombination mit einem $CO_2$-Laser können auch sehr große Strahlleistungen positioniert werden, wodurch auch Lasermaterialbearbeitung, z.B. Schweißen, möglich wird. Wegen der relativ langen Brennweiten der Fokussieroptiken, die dabei benutzt werden, spricht man hier auch von "remote welding". Die Kopplung eines Lasers über ein Lichtleitkabel an das Scan-System ist bislang wegen der geringen Strahlqualitäten der faser-übertragbaren Laserquellen (überwiegend Nd:YAG-Stablaser) zur Lasermaterialbearbeitung weniger geeignet gewesen. In jüngster Zeit sind jedoch Scheibenlaser und Faserlaser mit höheren Strahlqualitäten in ausreichender Leistung verfügbar geworden, so dass nun auch fasergekoppelte Laserquellen sinnvoll mit Scan-Systemen kombiniert werden können. Jedoch ist die Rayleigh-Länge der fokussierten Laserstrahlen trotz der höheren Strahlqualität immer noch relativ gering (typisch im Bereich weniger Millimeter), so dass die genaue Positionierung des Laserflecks nicht nur in der Ebene, sondern auch in der Höhe wichtig ist. Außerdem sind viele Schweiß-Aufgaben nicht auf Ebenen beschränkt, sondern die gewünschte Naht durchläuft eine Kurve im Raum. Daher ist es für viele Aufgaben wünschenswert, besonders für das Schweißen, den zweidimensionalen Arbeitsbereich eines Scansystems um die dritte Dimension, die Höhe bzw. die Position des Strahls in Strahlrichtung (die z-Achse), zu erweitern.

Hierzu sind bereits Vorrichtungen bekannt, bei denen z.B. ein Teil der Strahl-Aufweitungsoptik oder auch der Fokussieroptik in axialer Richtung bewegt werden kann, wodurch im ersten Fall der Strahl leicht konvergent oder divergent wird, bzw. im zweiten Fall die Brennweite des Fokussiersystems geändert wird, so dass sich in beiden Fällen resultierend die Fokusposition in axialer Richtung ändert. Ein solches System mit verstellbaren Linsen in der Fokussieroptik wird z.B. in der DE 103 43 080 A1 angegeben, wobei dort allerdings die Fokussieroptik vor dem Ablenksystem angeordnet ist, was nur bei Lasern mit höchster Strahlqualität sinnvoll ist, da dann auch Fokussieroptiken mit sehr großer Brennweite verwendet werden können. Die dort beschriebene Anordnung ist also eher für Laser mit geringer bis mittlerer Leistung geeignet.

Fasergekoppelte Laser mit hoher und höchster Leistung haben geringere Strahlqualitäten, deshalb ist es hier nahezu unumgänglich, die Fokussieroptik dem Ablenksystem nachfolgend anzuordnen, da man zwischen Fokussieroptik und Werkstück keinen Platz vergeuden möchte. Aus demselben Grund ist es bei Scansystemen für solche Laser nicht sinnvoll, Teile der Fokussieroptik oder gar die ganze Fokussieroptik selbst in axialer Richtung verstellbar anzuordnen, um die Fokusposition zu verstellen. Bei Scansystemen für fasergekoppelte Laser liegt es deshalb nahe, den Kollimator oder einen Teil des Kollimators, der benötigt wird, um den aus der Faserspitze austretenden divergenten Strahl zu kollimieren, in axialer Richtung zu bewegen.

In den oben beschriebenen Anordnungen hat man aber das Problem, dass sich mit der Änderung der Fokusposition in axialer Richtung auch der Abbildungsmaßstab ändert, so dass die Größe des Laserflecks sich verändert. Außerdem ist der Zusammenhang zwischen der Position des Kollimators oder einer zu bewegenden Linsengruppe zur Position des Fokus nichtlinear, so dass zur genauen Fokuseinstellung eine aufwändige Korrektur notwendig ist, bei der die Steuerungsdaten, z.B. Ortskoordinaten, die von einer übergeordneten Steuerung an die Ansteuerschaltung der Antriebsmotoren übergeben werden, zunächst in einem Zwischenschritt umgerechnet werden müssen in die korrekten Positionsdaten für die einzelnen Antriebe. Diese Zwischenberechnung wird durch die nichtlinearen Zusammenhänge zwischen den Fokuspositionen und den Bewegungen der Linsen oder Linsengruppen sehr aufwändig, zudem ist die Beschaffung der Korrekturfunktionen, die diese Zusammenhänge beschreiben, ebenfalls sehr aufwändig und größtenteils nur auf numerischem Weg oder gar auf experimentellem Weg durch Messung einer größeren Zahl von Stützpunkten möglich.

Die JP 11058059 A offenbart eine Methode und eine Vorrichtung, welche eine hervorragende Kollimation in einem großen Bereich ermöglicht, ohne dass der Durchmesser des übertragenen Laserstrahls aufgeweitet werden muss. Dazu ist die Anordnung der Kollimationslinse nahe des Austrittsspiegels einer Laserstrahlquelle beschrieben, wobei die Kollimationslinse beweglich ist und auf der optischen Achse derart positioniert wird, dass eine optimale Position eingestellt wird, wenn der Lasermaschinenkopf auf eine frei wählbare Position auf der optischen Achse bewegt wird.

Die US 4,997,250 offenbart eine Steckvorrichtung für das Laserstrahl emittierende Ende einer optischen Faser. Es ist vorgesehen, dass in der Steckvorrichtung eine erste Linse zur Kollimation eines Teils des Laserstrahls angeordnet ist. Der Laserstrahl wird beim Durchgang durch die Steckvorrichtung ausgeweitet und so geformt, dass er zur Materialbearbeitung geeignet ist, wofür er auf die Oberfläche eines Werkstückes fokussiert wird.

Ausgehend von diesem Stand der Technik ist es die Aufgabe der vorliegenden Erfindung, ein Verfahren und eine Vorrichtung zur Verfügung zu stellen, welche die zweidimensionale Arbeitsfläche eines Laser-Scan-Kopfes zu einem dreidimensionalen Arbeitsraum erweitern, wobei die Vergrößerungsvariation des Laserflecks und der nichtlineare Zusammenhang zwischen Verstellung einer oder mehrerer Linsen und der Fokusposition vermieden werden.

Gelöst wird diese Aufgabe durch die Merkmale der selbstständigen Ansprüche 1 und 27.

Erfindungsgemäß ist danach eine Vorrichtung zur Remote-Laser-Materialbearbeitung bestehend aus einem Kollimator mit der Brennweite $f_K$, welcher den aus einer Lichtleitfaser austretenden Laserstrahl kollimiert, einem Ablenksystem mit mindestens einem drehbar gelagerten Spiegel sowie einem Antrieb für die Winkelverstellung des Spiegels, und einem Fokussierobjektiv mit der Brennweite $f_O$, welches den kollimierten und vom Spiegelsystem abgelenkten Laserstrahl fokussiert, vorgesehen, bei welcher der Kollimator mittels einer Linearführung entlang der Strahlachse derart beweglich gelagert ist, dass die Position des Laserfokus nicht mehr auf eine Ebene beschränkt ist, sondern zur Beschreibung einer Bahnkurve im Raum geeignet ist, und wobei der mittlere Abstand zwischen dem Kollimator und dem Fokussierobjektiv so gewählt ist, dass bei einer Verstellung des Kollimators zur Fokusverschiebung in z-Richtung (Strahlachse) der Abbildungsmaßstab konstant bleibt.

Im Sinne der vorliegenden Erfindung soll unter der z-Achse die Strahlachse des Laserstrahls nach der Fokussierung durch das Fokussierobjektiv verstanden werden, gleichbedeutend mit der optischen Achse des Fokussierobjektivs.

Der Laserstrahl, der aus einer Lichtleitfaser austritt, wird von einem Kollimator kollimiert. Der Kollimator ist mittels einer Linearführung in Strahlrichtung beweglich gelagert und kann mittels eines Linearantriebs verschoben werden. Der kollimierte Strahl wird mittels eines Spiegelablenksystems (sog. Scanner) um einen variablen Winkel in zwei Richtungen verkippt. Das Spiegelablenksystem kann z.B. aus zwei hintereinander angeordneten, drehbar gelagerten Spiegeln und bestehen, deren Drehachsen um 90° zueinander verkippt sind und die mit Galvanometerantrieben und um einen wählbaren Winkel verdreht werden können. Der vom Spiegelablenksystem abgelenkte Strahl wird von einem Fokussierobjektiv in die Nenn-Fokusebene fokussiert.

Es ist auch eine Ausführungsform vorgesehen, bei der das Ablenksystem aus nur einem Umlenkspiegel besteht, welcher an drei Achsen über kombinierte Dreh- und Längslager mit jeweils einem Linearantrieb pro Achse derart aufgehängt ist, dass der Spiegel mittels der Linearantriebe in zwei voneinander unabhängigen Richtungen verkippt werden kann.

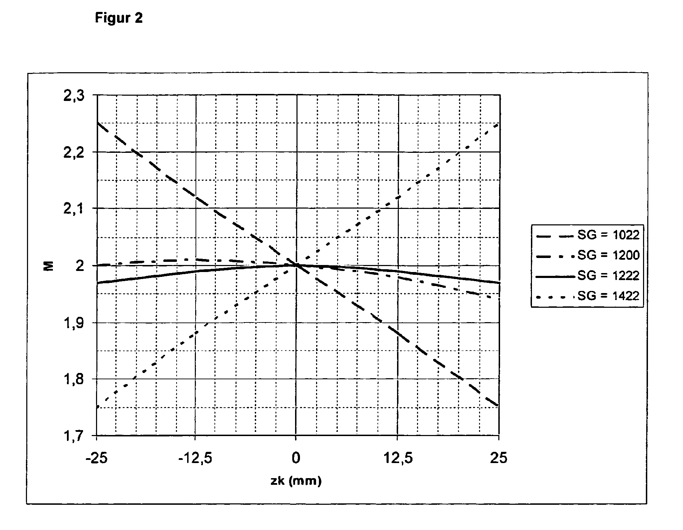

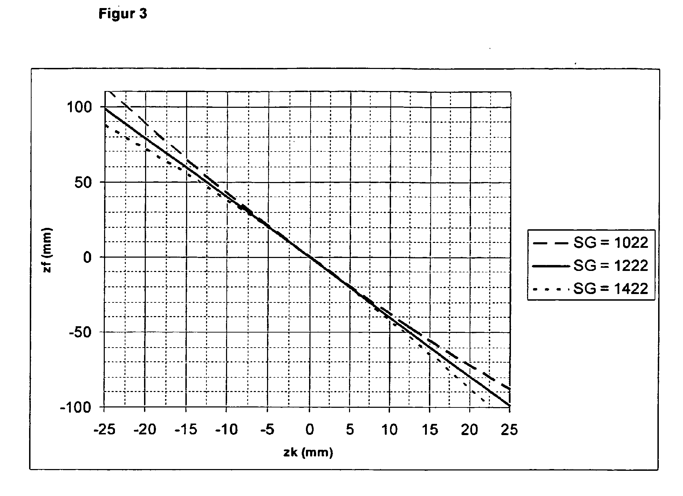

Demnach wird als Stellglied für die Fokusverschiebung in Richtung der z-Achse der ganze Kollimator verwendet, d.h. das Linsensystem, welches zur Kollimierung des aus der Lichtleitfaser austretenden Laserstrahls dient. Weiterhin wird der Nenn-Abstand zwischen dem Kollimator und dem Fokussierobjektiv so gewählt, dass beide unerwünschten Effekte, nämlich die Vergrößerungsvariation des Laserflecks und der nichtlineare Zusammenhang zwischen Verstellung des Kollimators und der Fokusposition, verschwinden bzw. minimal werden. Das ist dann der Fall, wenn das ganze optische System aus Kollimator und Fokussierobjektiv afokal wird, d.h. insgesamt keine Brechkraft besitzt, vergleichbar mit einem Teleskop. Wenn der Kollimator und das Fokussierobjektiv durch dünne Linsen beschreibbar wären, wäre der benötigte optimale Abstand zwischen dem Kollimator mit Brennweite $f_K$ und dem Fokussierobjektiv mit Brennweite $f_O$ gleich der Summe der beiden Brennweiten, $f_K+f_O$. Tatsächlich ist das Fokussierobjektiv wegen der notwendigen Korrektionsanforderungen aber sehr komplex aufgebaut, weswegen die Hauptebenen des Objektivs stark von den eigentlichen Linsenpositionen abweichen. Dies zeigt sich am deutlichsten bei typischen f-theta-Planfeldobjektiven, deren Bildschnittweite meist deutlich größer als die Brennweite ist. Zumindest die bildseitige Hauptebene liegt also ausserhalb des Objektivs. Die einfache Abstandsbedingung für die Objektive (Summe der Brennweiten) ist also in diesen Fällen gar nicht anwendbar. Man kann deshalb ausweichen auf die Bedingung, den Gesamtabstand $S_G$ zwischen Faserspitze und Nenn-Fokusebene einzustellen auf den Wert $S_G = 2*(f_K+f_O)$. Dies ist korrekt für den Fall dünner Linsen, bei der Verwendung komplexer optischer Systeme stellt dies aber wiederum eine nicht optimale Näherung dar. Es wurden deshalb typische Fokussierobjektive rechnerisch untersucht mit dem Ziel, den optimalen Abstand herauszufinden. Die Figuren 2 und 3 zeigen die Ergebnisse für ein Beispielsystem aus einem einfachen Kollimator mit 200 mm Brennweite ($f_K$) und einem Fokussierobjektiv mit einer effektiven Brennweite von 400 mm ($f_O$), welches aus zwei Linsen zusammengesetzt ist und dadurch eine Bildschnittweite von 468 mm erzielt, was die Verhältnisse eines typischen f-theta-Planfeldobjektivs sehr gut beschreibt. Die Ergebnisse zeigen, dass der optimale Abstand gegenüber der Näherungslösung für dünne Linsen (1200 mm) um ca. 2% zu vergrößern ist und bei 1222 mm liegt. Die optimale Abstandsbedingung für dieses System heißt also $S_G = 2,04*(f_K+f_O)$. Dieser Wert kann je nach Objektiv leicht schwanken. Die rechnerische Untersuchung mehrerer Systeme hat ergeben, dass der optimale Abstandswert in folgendem Bereich liegt:

$$2,01*(f_K+f_O) < S_G < 2,14*(f_K+f_O)$$

Dieser Bereich gewährleistet eine ausreichende Genauigkeit für die Konstanz der Vergrößerung und Linearität der Fokushöhenpositionsverstellung.

In einer bevorzugten Ausführungsform ist der mittlere Abstand zwischen dem Kollimator und dem Fokussierobjektiv so gewählt, dass der Gesamtabstand $S_G$ zwischen der Lichtleitfaserspitze und dem Fokus entlang der Strahlachse bei unverschobenem Kollimator im Bereich $2,01*(f_K+f_O) < S_G < 2,14*(f_K+f_O)$ liegt.

Bei einer erfindungsgemäßen Vorrichtung steht die Wegverschiebung $S_K$ des beweglich gelagerten Kollimators durch einen Linearantrieb mit der gewünschten Fokusverschiebung $S_F$ in Strahlrichtung in einem definierten, mathematisch berechenbaren Zusammenhang.

Der Zusammenhang zwischen der Fokusverschiebung $S_F$ und der Kollimatorverschiebung $S_K$ lautet dann:

$$S_K = S_F/M^2$$

Dabei ist M die Vergrößerung des Systems mit $M = f_O/f_K$.

Es handelt sich also um einen linearen Zusammenhang, so dass die Ansteuerung des Antriebs für die Einstellung der Arbeitshöhe des Fokus (die z-Koordinate) sehr einfach z.B. auch analog durch eine zur z-Koordinate proportionalen Spannung erfolgen kann.

Weiter ist vorgesehen, dass zwischen Kollimator und Ablenksystem mindestens ein weiterer feststehender Spiegel vorhanden ist.

Der feststehende Spiegel reflektiert in einer weiteren Ausführungsform die Laserstrahlung, jedoch mindestens ein Teil des sichtbaren Lichtspektrums wird transmittiert und dieses Licht wird mittels eines Abbildungsobjektivs auf eine CCD-Kamera abgebildet.

Der Kamerastrahlengang ist mittels eines weiteren Umlenkspiegels parallel zum kollimierten Laserstrahl umlenkbar und das Abbildungsobjektiv ist in axialer Richtung beweglich gelagert und mit der Bewegung des Kollimators gekoppelt.

Insbesondere wird durch die Kopplung der Verstellung von Kollimator und Abbildungsobjektiv für die Kamera, erreicht, dass das Kamerabild stets die Ebene scharf abbildet, in die auch der Laserstrahl fokussiert wird.

Für die Brennweite $f_A$ des Abbildungsobjektivs für die CCD-Kamera ist vorgesehen, dass sie gleich der Brennweite des Kollimators $f_K$ wählbar ist.

Der axial beweglich gelagerte Kollimator kann noch zusätzlich in vorteilhafter Weise genutzt werden, um die Fokusverschiebung eines sichtbaren Lasers, einem sogenannten Pilotlaser, beim Einrichten des Bearbeitungsprozesses zu kompensieren.

Für die Einrichtung des Systems, vor dem eigentlichen Betrieb zur Materialbearbeitung, ist es sehr hilfreich, die Fokusposition des Leistungslaserstrahls, der fast immer unsichtbar ist, visualisieren zu können. Für eben diesen Zweck ist in den handelsüblichen Strahlquellen ein sogenannter Pilotlaser mit sehr geringer Strahlleistung eingebaut, der in den Strahlweg des Leistungslasers eingekoppelt ist. Dieser Pilotlaser liegt im sichtbaren Bereich, meistens rot, und dient dazu, den Fokuspunkt auf dem Werkstück sichtbar zu machen. Bei der Verwendung von Optiken für den Hochleistungslaserbereich ergibt sich daraus jedoch ein Problem. Bauartbedingt weisen Optiken für Strahlleistungen von mehreren Kilowatt eine nicht zu vernachlässigende Dispersion auf, d.h. die Brennweite und damit die Fokusposition in axialer (z-) Richtung hängt von der Wellenlänge ab, was auch als chromatischer Fehler bezeichnet wird (sogenannte chromatische Längsaberration). Die Differenz der Fokuspositionen zwischen dem Leistungslaser (typische Wellenlänge zwischen 1030 nm und 1100 nm) und dem Pilotlaser (typische Wellenlänge zwischen 630 nm und 670 nm) kann in axialer Richtung bis zu einigen Zentimeter betragen bei den hier verwendeten optischen Systemen.

Dieser Fehler kann mittels der vorliegenden Erfindung kompensiert werden, indem der axial bewegliche Kollimator beim Betrieb der Vorrichtung mit einem Pilotlaser um einen festen Betrag $S_P$ verschoben wird, so dass der Pilotlaser nunmehr in der Ebene fokussiert wird, in der sonst der Leistungslaser fokussiert wird. Der Betrag $S_P$ wird bei optischen Systemen, deren Linsen alle aus demselben optischen Glas bestehen, in guter Näherung gegeben durch folgenden Zusammenhang:

$$S_P = f_K*(1+1/M)*((n_L-n_P)/(n_L-1))$$

Dabei ist $n_L$ der Brechungsindex des verwendeten Glases bei der Wellenlänge des Leistungslasers und $n_P$ entsprechend bei der Wellenlänge des Pilotlasers. Für Gläser mit normaler Dispersion ist $S_P$ deshalb üblicherweise negativ, d.h. der Kollimator muß im Einrichtbetrieb um $S_P$ näher an der Faserspitze stehen.

Dieser feste Betrag $S_P$ addiert sich als Offset auf den Stellweg auf, der benötigt wird, um den Fokuspunkt in axialer Richtung zu verschieben. Dieser Offset kann entweder innerhalb der Ansteuerschaltung für den Linearantrieb aufaddiert werden, oder innerhalb einer zusätzlichen elektronischen Steuerungseinheit, welche eine Skalierung der Steuerdaten vornehmen kann und weiter unten beschrieben wird.

Durch die Dispersion der Optik entsteht jedoch nicht nur eine Fokusdifferenz in axialer Richtung zwischen dem Leistungslaser und dem Pilotlaser, sondern auch in radialer Richtung (sogenannte chromatische Queraberration oder Farbvergrößerungsfehler). Diese radiale Fokusdifferenz ist Null, wenn der Strahl sich auf der optischen Achse (Symmetrieachse der Optik) befindet, und wird größer mit wachsendem Winkel (Auslenkung) des Strahls. Die Größe dieser Fokusdifferenz liegt typischerweise bei etwa einem Prozent der Bildhöhe, d.h. des radialen Abstandes des Fokuspunktes von der optischen Achse.

In einer weiteren Ausführungsform der erfindungsgemäßen Vorrichtung erfolgt die Ansteuerung der Antriebe von Kollimator und Ablenkspiegel durch eine elektronische Steuerungseinheit, die über eine Schnittstelle die Zielkoordinaten für den Laserfokus von einer übergeordneten Steuerung erhält.

Es ist vorgesehen, dass die elektronische Steuerungseinheit aus den Zielkoordinaten für den Laserfokus die notwendigen Stellwege der Antriebe berechnet und die Antriebe entsprechend ansteuert.

Weiterhin ist die elektronische Steuerungseinheit dazu geeignet, bei der Berechnung der Antriebsstellwege Verzerrungen, die aus der Strahlablenkungsgeometrie und der Fokussierung resultieren, zu kompensieren.

Die erfindungsgemäße Vorrichtung ist für den Einrichtbetrieb mit einem sichtbaren Pilotlaser geeignet, wobei dann die Ansteuerung der Antriebe um einen kleinen Betrag geändert wird, um die chromatischen Fehler der Fokussierung zu kompensieren.

Es ist auch vorgesehen, dass es sich bei dem Pilotlaser um einen eigenen, im Gerät eingebauten Laser handeln kann; diese Ausführungsform wird weiter unten beschrieben.

Die elektronische Steuerungseinheit ist weiterhin auch zur Verarbeitung von Informationen über die jeweils benutzte Laserleistung vorgesehen.

Es ist eine Ausführungsform der erfindungsgemäßen Vorrichtung vorgesehen, bei der die elektronische Steuerungseinheit die Informationen über die gerade benutzte Laserleistung über eine Schnittstelle von dem Lasergerät oder von der übergeordneten Steuerung erhält.

Des weiteren ist eine Ausführung vorgesehen, bei welcher der Bearbeitungskopf einen integrierten Sensor aufweist, welcher die gerade genutzte Laserleistung misst und den Messwert an die Steuerungseinheit übermittelt.

Als im Bearbeitungskopf integrierter Sensor ist vorzugsweise eine Photodiode vorgesehen, wobei die Photodiode alternativ hinter dem Umlenkspiegel angeordnet ist.

Da bei der Nutzung eines Lasers ein Teil der eingesetzten Energie in Wärme umgesetzt wird, folgt eine Erwärmung von Teilen der Vorrichtung, welche sich in der Nähe der Lichtquelle oder des Strahlenganges des Laser befinden. Aus der Erwärmung von Teilen der Apparatur, insbesondere aus der Erwärmung der vom Laser durchstrahlten optischen Elemente der Linsensysteme, kann eine Fokusverschiebung resultieren.

Der axial beweglich gelagerte Kollimator kann in vorteilhafter Weise genutzt werden, um die Fokusverschiebung des Leistungslaserstrahls zu kompensieren, die durch die Erwärmung der vom Leistungslaserstrahl durchstrahlten optischen Elemente zustande kommt.

Daher ist eine Vorrichtung vorgesehen, bei der die elektronische Steuerungseinheit zur Berechnung der Veränderung der Fokusposition geeignet ist, verursacht durch die Absorption der Laserstrahlung in den optischen Elementen, sowie zur Berechnung der Korrekturwerte für die Verstellung der Antriebe geeignet ist, insbesondere des Kollimator-Antriebs, damit der Laserfokus die gewünschte Position erreicht und behält.

Die elektronische Steuerungseinheit ist auch dazu geeignet die umschaltbare Skalierung der Steuerungsdaten zu übernehmen. Im Leistungsbetrieb werden die Steuerdaten einfach durchgeleitet, im Einrichtbetrieb werden die Steuerdaten um einen kleinen Betrag modifiziert, welcher der durch die Optik-Dispersion verursachten Fokusdifferenz entspricht. Diese umschaltbare Skalierung kann auch in der Ansteuerschaltung der Antriebe stattfinden, dann ist dafür keine zusätzliche Schaltungseinheit notwendig.

Es kann auch nützlich sein, die Einrichtung des Bearbeitungsprozesses vornehmen zu können, ohne dass dazu eine (Leistungs-) Strahlquelle angeschlossen sein muss. Deshalb ist es eine weitere vorteilhafte Ausgestaltung, innerhalb der Vorrichtung einen eigenen sichtbaren Pilotlaser einzubauen. Zu diesem Zweck wird zwischen Lichtleitfaser und Kollimator ein weiterer Spiegel eingebaut. Dieser Spiegel ist so beschichtet, dass der Leistungsstrahl reflektiert wird, aber für den Pilotlaser weitgehend durchlässig ist (ein so genannter dichroitischer Spiegel, im folgenden auch als Strahlteiler bezeichnet). Auf diese Weise kann man den Abstand zwischen Pilotlaser, welcher vorzugsweise eine Laserdiode ist, und dem Kollimator von vornherein so einstellen, dass dieser interne Pilotlaser exakt in derselben Ebene fokussiert wird wie der Leistungslaser. Zu diesem Zweck ist dieser Abstand so einzustellen, dass er sich um den Differenzbetrag $S_p$ vom Abstand zwischen Faserspitze und Pilotlaser unterscheidet. Bei dieser Anordnung kann daher die Aufaddierung des Offsets bei der Ansteuerung des Kollimator-Antriebs entfallen. Die umschaltbare Skalierung zur Kompensation der radialen Fokusdifferenz ist allerdings auch bei internem Pilotlaser sinnvoll. Vorteilhafterweise wird die Umschaltung der Skalierung mit dem Ein/Ausschalten des internen Pilotlasers gekoppelt. Die Skalierung der Steuerdaten auf den sichtbaren Pilotlaser ist dann nur solange aktiv, wie auch der Pilotlaser selbst eingeschaltet ist. Auf diese Weise kann einem Bedienungsfehler weitgehend vorgebeugt werden.

Vorteilhafterweise ist der Strahlteiler derart angeordnet, dass er mindestens zwei sichtbare Pilotlaserstrahlen in den Strahlengang einspiegelt, die parallel zur optischen Achse versetzt sind und symmetrisch um die optische Achse angeordnet sind und so justiert sind, dass sich die Fokuspunkte dieser Strahlen an der Position des Leistungslaserfokus überlagern.

Eine besonders günstige Visualisierung des Laserfokus durch einen sichtbaren Pilotlaser gelingt durch die Verwendung von mindestens zwei zueinander versetzten Pilotlaserstrahlen, die sich in der korrekten Fokusebene überlagern. Die Erkennung der korrekten Fokuslage lässt sich unterstützen, indem die beiden Pilotlaserstrahlen mit einer vom Auge wahrnehmbaren Frequenz alternierend eingeschaltet werden.

Für die beiden Pilotlaserstrahlen ist vorgesehen, dass diese abwechselnd, mit einer Taktfrequenz zwischen 1 Hz und 20 Hz einschaltbar sind.

Weiter wird in einer Ausführungsform der erfindungsgemäßen Vorrichtung zum Einspiegeln der Pilotlaserstrahlen der feststehende Spiegel genutzt, der auch zur Auskopplung des Lichts für den Strahlengang der CCD-Kamera dient.

Zum Schutz der optischen Systeme in einem Laser-Bearbeitungskopf ist es üblich, die Frontlinse, die der Bearbeitung zugewandt ist, durch ein auswechselbares Schutzglas vor den Emissionen des Laserbearbeitungsprozesses zu schützen. Diese Vorrichtung ist Stand der Technik und wird auch in der vorliegenden Erfindung angewendet. Eine weitere vorteilhafte Ausgestaltung der Erfindung ist es aber, auch ein Schutzglas zwischen Kollimator und Lichtleitfaser vorzusehen. Normalerweise ist dieser Zwischenraum baulich abgeschlossen, so dass dort eigentlich keine Bearbeitungsemissionen oder Schmutz und Staub aus der Umgebung eindringen kann. Jedoch ist die Lichtleitfaser steckbar ausgeführt, deshalb ist beim Ein- oder Ausstecken des Lichtleitkabelsteckers der Kollimator kurzzeitig nicht geschützt, so dass auch dort z.B. Staub oder Abrieb der Stecker-Mechanik eindringen kann. Deshalb wird hier ein Schutzglas vorgesehen, dessen Austausch im Bedarfsfall deutlich kostengünstiger ist als der Austausch einer verschmutzten Linse. Da hier aber im Normalfall der Grad der Verschmutzung sehr gering ist, das Schutzglas also voraussichtlich nur sehr selten getauscht werden muss, ist es eine besonders vorteilhafte Ausgestaltung der Erfindung, hier ein sehr robustes und widerstandsfähiges Schutzglas vorzusehen, beispielsweise aus Quarz oder besonders vorteilhaft aus Saphir.

Ein weiterer Gegenstand der vorliegenden Erfindung ist ein Verfahren zur Remote-Laser-Materialbearbeitung, bei dem mittels eines Kollimators mit der Brennweite $f_K$ der aus einer Lichtleitfaser austretende Laserstrahl kollimiert wird, und mittels eines Ablenksystems mit mindestens einem drehbar gelagerten Spiegel und einem Antrieb für die Winkelverstellung des Spiegels sowie mittels einem Fokussierobjektiv mit der Brennweite $f_O$, der kollimierte und vom Spiegelsystem abgelenkten Laserstrahl fokussiert wird, wobei der Laserfokus auf einer Bahnkurve im Raum bewegt wird, wobei der Abbildungsmaßstab und die Größe des Laserfokus annähernd konstant bleibt.

In einer weiterer Ausgestaltung des erfindungsgemäßen Verfahrens wird der Kollimator mittels einer Linearführung und eines Antriebes entlang der Strahlachse bewegt, um den Laserfokus in der z-Achse mit konstanter Fokusgröße zu positionieren.

In einem bevorzugten Ausführungsform des erfindungsgemäßen Verfahrens wird der mittlere Abstand zwischen dem Kollimator und dem Fokussierobjektiv so gewählt, dass der Gesamtabstand $S_G$ zwischen der Lichtleitfaserspitze und dem Fokus entlang der Strahlachse bei unverschobenem Kollimator im Bereich $2{,}01*(f_K+f_O) < S_G < 2{,}14*(f_K+f_O)$ liegt.

Es ist vorgesehen, dass bei einem Verfahren gemäß der Erfindung der beweglich gelagerte Kollimator von einem Linearantrieb um einen Weg $S_K$ verschoben wird, der zuvor aus der gewünschten Fokusverschiebung $S_F$ in Strahlrichtung bestimmt wurde.

Weiterhin ist ein Verfahren vorgesehen, bei dem der beweglich gelagerte Kollimator von einem Linearantrieb um einen Weg $S_K$ verschoben wird, der der gewünschten Fokusverschiebung $S_F$ in Strahlrichtung dividiert durch das Quadrat der Vergrößerung M entspricht, wobei die Vergrößerung M durch das Brennweitenverhältnis $f_O/f_K$ definiert ist, nach der Formel $S_K = S_F/M^2$.

Letztlich ist auch ein Verfahren vorgesehen, bei dem durch eine elektronische Steuerungseinheit die Veränderung der Fokusposition berechnet wird, die durch die Absorption der Laserstrahlung in den optischen Elementen hervorgerufen wird, und daraus Korrekturwerte für die Verstellung der Antriebe, insbesondere des Kollimator-Antriebs, berechnet werden, damit der Laserfokus die gewünschte Position erreicht und behält.

Weitere vorteilhafte Maßnahmen sind in den übrigen Unteransprüchen beschrieben; die Erfindung wird anhand von Ausführungsbeispielen und der nachfolgenden Figuren näher beschrieben; es zeigt:

**Figur 1** Vorrichtung für einen Scan-Laserbearbeitungskopf

**Figur 2** Darstellung der Änderung der Vergrößerung M bei Änderung der Kollimator-Position zk zur Verschiebung der axialen Fokusposition bei verschiedenen Gesamtabständen $S_G$ zwischen Faserspitze und NennFokusebene

**Figur 3** Zusammenhang zwischen der Kollimator-Position zk und der Fokusposition zf

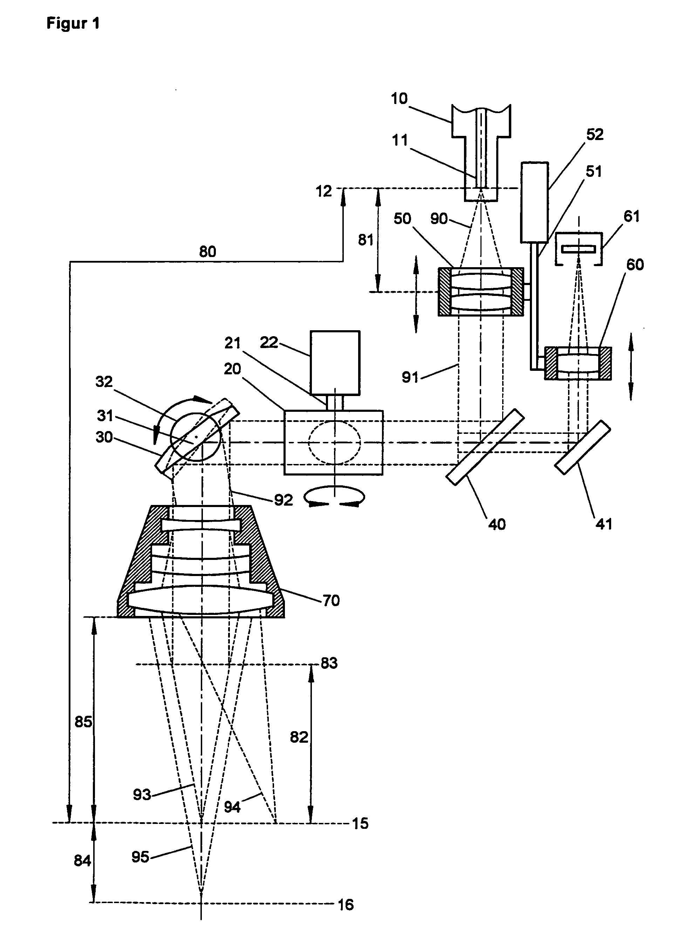

Figur 1 zeigt eine Vorrichtung für einen Scan-Laserbearbeitungskopf, bei dem der Laserfleck (Fokus) in einem dreidimensionalen Arbeitsraum positioniert werden kann. An der Drehachse 21 findet eigentlich eine Umlenkung des Strahls aus der Zeichenebene heraus statt, zwecks übersichtlicherer Darstellung ist diese Umlenkung in die Zeichenebene zurückgekippt, so dass die Umlenkung nicht sichtbar ist.

In Figur 2 ist die Änderung der Vergrößerung M bei Änderung der Kollimator-Position zk zur Verschiebung der axialen Fokusposition bei verschiedenen Gesamtabständen $S_G$ zwischen Faserspitze und Nenn-Fokusebene dargestellt. Das Beispiel-System besteht aus einem Kollimator mit 200 mm Brennweite und einem Fokussierobjektiv mit 400 mm Brennweite. Das Fokussierobjektiv ist simuliert durch eine Kombination von einer Negativlinse (Brennweite -500 mm) mit einer Positivlinse (Brennweite 260 mm) im Abstand von 85 mm, so dass sich ein Objektiv mit einer effektiven Brennweite von 400 mm und einem Arbeitsabstand (= Bildschnittweite) von 468 mm ergibt, was die Verhältnisse an einem typischen f-theta-Planfeldobjektiv sehr gut beschreibt. Der optimale Gesamtabstand, bei dem die Änderung der Vergrößerung minimal ist, liegt bei 1222 mm und ist damit um 22 mm größer, als es sich bei einem idealen Objektiv (= dünne Linse) ergeben würde.

Figur 3 zeigt eine Darstellung des Zusammenhangs zwischen der Kollimator-Position zk und der Fokusposition zf bei verschiedenen Gesamtabständen $S_G$ zwischen Faserspitze und Nenn-Fokusebene für dasselbe Beispiel-System wie in Fig. 2 mit 200 mm Kollimationsbrennweite und 400 mm Fokussier-Brennweite. Beim optimalen Gesamtabstand von 1222 mm für das Beispiel-System ist der Zusammenhang in sehr guter Näherung linear.

## Bezugszeichenliste

| | |
|---|---|
| 10 | Lichtleitkabelstecker |
| 11 | Lichtleitfaser |
| 12 | Bezugsebene für die Lichtleitfaserspitze |
| 15 | Nenn-Fokusebene (Brennebene des Fokussierobjektivs 70) |
| 16 | in der Höhe verschobene Fokusposition |
| 20 | beweglicher Umlenkspiegel 1 |
| 21 | Drehachse des Spiegels 1 |
| 22 | Galvanometerantrieb für Spiegel 1 |
| 30 | beweglicher Umlenkspiegel 2 |
| 31 | Drehachse des Spiegels 2 |
| 32 | Galvanometerantrieb für Spiegel 2 |
| 40 | feststehender Umlenkspiegel 3 |
| 41 | feststehender Umlenkspiegel 4 |
| 50 | Kollimationsobjektiv mit Brennweite $f_K$ |
| 51 | Linearführung und Koppeleinheit |
| 52 | Linearantrieb |
| 60 | Abbildungsobjektiv mit Brennweite $f_A$ |
| 61 | CCD Kamera |
| 70 | Fokussierobjektiv mit Brennweite $f_O$ |
| 80 | Gesamtabstand $S_G$ zwischen Faserspitze und Nenn-Fokusebene |
| 81 | Brennweite $f_K$ des Kollimationsobjektivs |
| 82 | Brennweite $f_O$ des Fokussierobjektivs |
| 83 | bildseitige Hauptebene des Fokussierobjektivs |
| 84 | Verschiebung der Fokusposition in Strahlrichtung |
| 85 | Arbeitsabstand des Fokussierobjektivs bzw. bildseitige Schnittweite |
| 90 | aus der Faserspitze austretender divergenter Laserstrahl |
| 91 | vom Kollimationsobjektiv kollimierter Laserstrahl |
| 92 | von den beweglichen Umlenkspiegeln abgelenkter Laserstrahl |
| 93 | vom Fokussierobjektiv fokussierter Laserstrahl in Nennposition |
| 94 | abgelenkter, fokussierter Laserstrahl in der Nenn-Fokusebene |
| 95 | fokussierter Laserstrahl mit in der Höhe verschobener Fokusposition |

## Patentansprüche

1. Vorrichtung zur Remote-Laser-Materialbearbeitung bestehend aus einem Kollimator (50) mit der Brennweite $f_K$ (81), welcher den aus einer Lichtleitfaser (11) austretenden Laserstrahl (90) kollimiert, einem Ablenksystem mit mindestens einem drehbar gelagerten Spiegel (20, 30) sowie einem Antrieb (22, 32) für die Winkelverstellung des Spiegels (20, 30), und einem Fokussierobjektiv (70) mit der Brennweite $f_O$ (82), welches den kollimierten und vom Spiegelsystem abgelenkten Laserstrahl fokussiert, **dadurch gekennzeichnet, dass**

   a. der Kollimator (50) mittels einer Linearführung (51) entlang der Strahlachse derart beweglich gelagert ist, dass die Position des Laserfokus nicht mehr auf eine Ebene beschränkt ist, sondern zur Beschreibung einer Bahnkurve im Raum geeignet ist, sowie **dadurch dass**
   b. der mittlere Abstand zwischen dem Kollimator (50) und dem Fokussierobjektiv (70) so gewählt ist, dass der Gesamtabstand $S_G$ zwischen der Lichtleitfaserspitze und dem Fokus entlang der Strahlachse bei unverschobenem Kollimator (50) im Bereich $2,01*(f_K+f_O) < S_G < 2,14*(f_K+f_O)$ liegt.

2. Vorrichtung nach Anspruch 1, **dadurch gekennzeichnet, dass** die Wegverschiebung $S_K$ des beweglich gelagerten Kollimators (50) durch einen Linearantrieb (52) mit der gewünschten Fokusverschiebung $S_F$ in Strahlrichtung in einem definierten Zusammenhang steht.

3. Vorrichtung nach einem der Ansprüche 1 oder 2, **dadurch gekennzeichnet, dass** der beweglich gelagerte Kollimator (50) von einem Linearantrieb (52)

um einen Weg $S_K$ verschiebbar ist, welcher der gewünschten Fokusverschiebung $S_F$ in Strahlrichtung dividiert durch das Quadrat der Vergrößerung M entspricht, wobei die Vergrößerung M durch das Brennweitenverhältnis $f_O/f_K$ definiert ist, ausgedrückt durch die Formel. $S_K = S_F/M^2$,

4. Vorrichtung nach einem der Ansprüche 1 bis 3, **dadurch gekennzeichnet, dass** das Ablenksystem aus zwei Umlenkspiegeln (20, 30) besteht, deren Drehachsen (21, 31) um 90° zueinander angeordnet sind, und die durch Galvanometerantriebe (22, 32) bewegt werden.

5. Vorrichtung nach einem der Ansprüche 1 bis 4, **dadurch gekennzeichnet, dass** das Ablenksystem aus nur einem Umlenkspiegel (20, 30) besteht, welcher an drei Achsen über kombinierte Dreh- und Längslager mit jeweils einem Linearantrieb (52) pro Achse derart aufgehängt ist, dass der Spiegel mittels der Linearantriebe (52) in zwei voneinander unabhängigen Richtungen verkippt werden kann.

6. Vorrichtung nach einem der Ansprüche 1 bis 5, **dadurch gekennzeichnet, dass** zwischen Kollimator (50) und Ablenksystem mindestens ein weiterer feststehender Spiegel (40) vorhanden ist.

7. Vorrichtung nach Anspruch 6, **dadurch gekennzeichnet, dass** der feststehende Spiegel (40) die Laserstrahlung reflektiert, jedoch mindestens ein Teil des sichtbaren Lichtspektrums transmittiert, und dass dieses Licht mittels eines Abbildungsobjektivs (60) auf eine CCD-Kamera (61) abgebildet wird.

8. Vorrichtung nach Anspruch 7, **dadurch gekennzeichnet, dass** der Kamerastrahlengang mittels eines weiteren Umlenkspiegels (41) parallel zum kollimierten Laserstrahl umlenkbar ist und dass das Abbildungsobjektiv (60) in axialer Richtung beweglich gelagert ist und mit der Bewegung des Kollimators (50) gekoppelt ist.

9. Vorrichtung nach Anspruch 8, **dadurch gekennzeichnet, dass** die Brennweite $f_A$ des Abbildungsobjektivs (60) für die CCD-Kamera (61) gleich der Brennweite des Kollimators $f_K$ wählbar ist.

10. Vorrichtung nach einem der Ansprüche 1 bis 9, **dadurch gekennzeichnet, dass** die Ansteuerung der Antriebe von Kollimator (50) und Ablenkspiegel (20, 30) durch eine elektronische Steuerungseinheit erfolgt, die über eine Schnittstelle die Zielkoordinaten für den Laserfokus von einer übergeordneten Steuerung erhält.

11. Vorrichtung nach Anspruch 10, **dadurch gekennzeichnet, dass** die elektronische Steuerungseinheit aus den Zielkoordinaten für den Laserfokus die notwendigen Stellwege der Antriebe berechnet und die Antriebe entsprechend ansteuert.

12. Vorrichtung nach Anspruch 11, **dadurch gekennzeichnet, dass** die elektronische Steuerungseinheit dazu geeignet ist, bei der Berechnung der Antriebsstellwege Verzerrungen, die aus der Strahlablenkungsgeometrie und der Fokussierung resultieren, zu kompensieren.

13. Vorrichtung nach Anspruch 11 oder 12, **dadurch gekennzeichnet, dass** die Vorrichtung für den Einrichtbetrieb mit einem sichtbaren Pilotlaser geeignet ist, wobei dann die Ansteuerung der Antriebe um einen kleinen Betrag geändert wird, um chromatische Fehler der Fokussierung zu kompensieren.

14. Vorrichtung nach einem der Ansprüche 1 bis 13, **dadurch gekennzeichnet, dass** die elektronische Steuerungseinheit Informationen über die jeweils benutzte Laserleistung verarbeitet.

15. Vorrichtung nach Anspruch 14, **dadurch gekennzeichnet, dass** die elektronische Steuerungseinheit die Informationen über die gerade benutzte Laserleistung über eine Schnittstelle von dem Lasergerät oder von der übergeordneten Steuerung erhält.

16. Vorrichtung nach Anspruch 14, **dadurch gekennzeichnet, dass** der Bearbeitungskopf einen integrierten Sensor aufweist, welcher die gerade genutzte Laserleistung misst und den Messwert an die Steuerungseinheit übermittelt.

17. Vorrichtung nach Anspruch 16, **dadurch gekennzeichnet, dass** der im Bearbeitungskopf integrierte Sensor eine Photodiode ist.

18. Vorrichtung nach Anspruch 17, **dadurch gekennzeichnet, dass** die Photodiode hinter dem Umlenkspiegel 40 angeordnet ist.

19. Vorrichtung nach einem der Ansprüche 14 bis 18, **dadurch gekennzeichnet, dass** die elektronische Steuerungseinheit zur Berechnung der Veränderung der Fokusposition geeignet ist, verursacht durch die Absorption der Laserstrahlung in den optischen Elementen, sowie zur Berechnung der Korrekturwerte für die Verstellung der Antriebe geeignet ist, insbesondere des Kollimator-Antriebs, damit der Laserfokus die gewünschte Position erreicht und behält.

20. Vorrichtung nach einem der Ansprüche 1 bis 19, **dadurch gekennzeichnet, dass** zwischen Lichtleitkabel und Kollimator (50) ein auswechselbares Schutzglas angeordnet ist.

**21.** Vorrichtung nach Anspruch 20, **dadurch gekennzeichnet, dass** das Schutzglas aus Quarzglas oder Saphir hergestellt ist und reflexmindernd beschichtet ist.

**22.** Vorrichtung nach einem der Ansprüche 1 bis 21, **dadurch gekennzeichnet, dass** über einen Strahlteiler ein sichtbarer Pilotlaserstrahl in den Strahlengang eingespiegelt wird.

**23.** Vorrichtung nach einem der Ansprüche 1 bis 21, **dadurch gekennzeichnet, dass** ein Strahlteiler derart angeordnet ist, dass er mindestens zwei sichtbare Pilotlaserstrahlen in den Strahlengang einspiegelt, die parallel zur optischen Achse versetzt sind und symmetrisch um die optische Achse angeordnet sind und so justiert sind, dass sich die Fokuspunkte dieser Strahlen an der Position des Leistungslaserfokus überlagern.

**24.** Vorrichtung nach Anspruch 22, **dadurch gekennzeichnet, dass** die beiden Pilotlaserstrahlen abwechselnd, mit einer Taktfrequenz zwischen 1 Hz und 20 Hz einschaltbar sind.

**25.** Vorrichtung nach einem der Ansprüche 22 bis 24, **dadurch gekennzeichnet, dass** zum Einspiegeln der Pilotlaserstrahlen der Spiegel 40 genutzt wird.

**26.** Verfahren zur Remote-Laser-Materialbearbeitung, bei dem mittels eines Kollimators (50) mit der Brennweite $f_K$ (81) der aus einer Lichtleitfaser (11) austretende Laserstrahl 90 kollimiert wird, und mittels eines Ablenksystems mit mindestens einem drehbar gelagerten Spiegel (20, 30) und einem Antrieb (22, 32) für die Winkelverstellung des Spiegels sowie mittels einem Fokussierobjektiv (70) mit der Brennweite $f_O$ (82), der kollimierte und vom Spiegelsystem abgelenkten Laserstrahl fokussiert wird, **dadurch gekennzeichnet dass** der Kollimator mittels einer Linearführung (51) und eines Antriebes entlang der Strahlachse bewegt wird, um den Laserfokus in der z-Achse mit konstanter Fokusgröße zu positionieren und der Laserfokus auf einer Bahnkurve im Raum bewegt wird, wobei der Gesamtabstand $S_G$ zwischen der Lichtleitfaserspitze und dem Fokus entlang der Strahlachse bei unverschobenem Kollimator (50) im Bereich $2,01*(f_K+f_O) < S_G < 2,14*(f_K+f_O)$ liegt.

**27.** Verfahren nach Anspruch 26, **dadurch gekennzeichnet, dass** der beweglich gelagerte Kollimator 50 von einem Linearantrieb 52 um einen Weg $S_K$ verschoben wird, der zuvor aus der gewünschten Fokusverschiebung $S_F$ in Strahlrichtung bestimmt wurde.

**28.** Verfahren nach einem der Ansprüche 26 oder 27, **dadurch gekennzeichnet, dass** der beweglich gelagerte Kollimator 50 von einem Linearantrieb 52 um einen Weg $S_K$ verschoben wird, der der gewünschten Fokusverschiebung $S_F$ in Strahlrichtung dividiert durch das Quadrat der Vergrößerung M entspricht, wobei die Vergrößerung M durch das Brennweitenverhältnis $f_O/f_K$ definiert ist, nach der Formel $S_K = S_F/M^2$.

**29.** Verfahren nach einem der Ansprüche 26 bis 28, **dadurch gekennzeichnet, dass** durch eine elektronische Steuerungseinheit die Veränderung der Fokusposition berechnet wird, die durch die Absorption der Laserstrahlung in den optischen Elementen hervorgerufen wird, und daraus Korrekturwerte für die Verstellung der Antriebe, insbesondere des Kollimator-Antriebs, berechnet werden, damit der Laserfokus die gewünschte Position erreicht und behält.

**Claims**

**1.** An apparatus for remote laser processing of materials, said apparatus consisting of a collimator (50) with a focal length $f_K$ (81), which collimates the laser beam (90) emitted from an optical fiber (11), a deflection system with at least one rotatably mounted mirror (20, 30), as well as a drive (22, 32) to adjust the angle of the mirror (20, 30), and a focusing objective (70) with a focal length $f_O$ (82), which focuses the collimated laser beam deflected by the mirror system, **characterized in that**

a. the collimator (50) is movably mounted along the beam axis by means of a linear guide (51) in such a way that the position of the laser focus is no longer restricted to a single plane, but rather is suited to describe a trajectory in space, and that

b. the mean distance between the collimator (50) and the focusing objective (70) is selected such that the overall distance $S_G$ between the optical fiber tip and the focus along the beam axis with non-shifted collimator (50) is in the range of $2,01 \times (f_K+f_O) < S_G < 2,14 \times (f_K+f_O)$.

**2.** The apparatus according to claim 1, **characterized in that** the path shift $S_K$ of the movably mounted collimator (50) via a linear drive (52) is in well-defined correlation with the desired focus shift $S_F$ in beam direction.

**3.** The apparatus according to any of claims 1 or 2, **characterized in that** the movably mounted collimator (50) can be shifted by a linear drive (52) by a path $S_K$ which corresponds to the desired focus shift $S_F$ in beam direction divided by the square of the magnification M, said magnification M being defined by the focal length ratio $f_O/f_K$, as expressed by the formula $S_K = S_F/M^2$.

4. The apparatus according to any of claims 1 to 3, **characterized in that** the deflection system is constituted of two deflecting mirrors (20, 30) whose axes of rotation (21, 31) are arranged at 90° relative to each other and which are moved by galvanometer drives (22, 32).

5. The apparatus according to any of claims 1 to 4, **characterized in that** the deflection system is constituted of only one deflecting mirror (20, 30) suspended at three axes via combined pivot and longitudinal bearings with one linear drive (52) per axis in such a way that the mirror can be tilted by the linear drives (52) in two independent directions.

6. The apparatus according to any of claims 1 to 5, **characterized in that** at least one additional, fixed mirror (40) is present between collimator (50) and deflection system.

7. The apparatus according to claim 6, **characterized in that** the fixed mirror (40) reflects the laser radiation but transmits at least part of the visible light spectrum, and that this light is imaged on a CCD camera (61) by means of an imaging objective (60).

8. The apparatus according to claim 7, **characterized in that** the optical path of the camera can be deflected parallel to the collimated laser beam by means of another deflecting mirror (41), and that the imaging objective (60) is movably mounted in axial direction and coupled with the movement of the collimator (50).

9. The apparatus according to claim 8, **characterized in that** the focal length $f_A$ of the imaging objective (60) for the CCD camera (61) can be selected so as to be equal to the focal length of the collimator $f_K$.

10. The apparatus according to any of claims 1 to 9, **characterized in that** the drives of collimator (50) and deflecting mirror (20, 30) are controlled by an electronic control unit receiving the target coordinates for the laser focus from a superset control via an interface.

11. The apparatus according to claim 10, **characterized in that** the electronic control unit calculates the required regulating distances of the drives from the target coordinates for the laser focus and correspondingly addresses the drives.

12. The apparatus according to claim 11, **characterized in that** the electronic control, when calculating the drive regulating distances, is suited to compensate for distortions resulting from the beam deflection geometry and focusing.

13. The apparatus according to claim 11 or 12, **characterized in that** the apparatus is suitable for set-up operation using a visible pilot laser, in which case controlling the drives is varied by a small amount so as to compensate for chromatic aberration of focusing.

14. The apparatus according to any of claims 1 to 13, **characterized in that** the electronic control unit processes information relating to the laser power used each time.

15. The apparatus according to claim 14, **characterized in that** the electronic control unit receives information relating to the laser power used at a particular point in time via an interface of the laser instrument or from the superset control.

16. The apparatus according to claim 14, **characterized in that** the processing head has an integrated sensor which measures the laser power used at a particular point in time and transmits the measured value to the control unit.

17. The apparatus according to claim 16, **characterized in that** the sensor integrated in the processing head is a photodiode.

18. The apparatus according to claim 17, **characterized in that** the photodiode is arranged behind the deflecting mirror 40.

19. The apparatus according to any of claims 14 to 18, **characterized in that** the electronic control unit is suited to calculate the change in focus position caused by absorption of laser radiation in the optical elements, and suited to calculate corrected values for adjusting the drives, especially the collimator drive, so that the laser focus can reach and retain the desired position.

20. The apparatus according to any of claims 1 to 19, **characterized in that** a replaceable protective glass is arranged between the optical fiber cable and the collimator (50).

21. The apparatus according to claim 20, **characterized in that** the protective glass is made of quartz or sapphire and provided with a coating that reduces reflection.

22. The apparatus according to any of claims 1 to 21, **characterized in that** a visible pilot laser beam is mirrored into the optical path via a beam splitter.

**23.** The apparatus according to any of claims 1 to 21, **characterized in that** a beam splitter is arranged so as to mirror at least two visible pilot laser beams into the optical path, which are displaced parallel to the optical axis and arranged symmetrically around the optical axis and adjusted in such a way that the focal points of the beams coincide at the position of the high-performance laser focus.

**24.** The apparatus according to claim 22, **characterized in that** the two pilot laser beams can be switched on alternately with a strobe frequency between 1 Hz and 20 Hz.

**25.** The apparatus according to any of claims 22 to 24, **characterized in that** the mirror 40 is used in mirroring the pilot laser beams.

**26.** A method of remote laser processing of materials, wherein the laser beam 90 emitted from an optical fiber (11) is collimated by means of a collimator (50) with a focal length $f_K$ (81), and the collimated laser beam deflected by the mirror system is focused by means of a deflection system with at least one rotatably mounted mirror (20, 30) and a drive (22, 32) to adjust the angle of the mirror and a focusing objective (70) with a focal length $f_O$ (82), **characterized in that** the collimator is moved along the beam axis by means of a linear guide (51) and a drive so as to position the laser focus with constant focus size in the z axis and move the laser focus on a trajectory in space, the overall distance $S_G$ between the optical fiber tip and the focus along the beam axis with non-shifted collimator (50) being in the range of $2,01 \times (f_K+f_O) < S_G < 2,14 \times (f_K+f_O)$.

**27.** The method according to claim 26, **characterized in that** the movably mounted collimator 50 is shifted via linear drive 52 by a path $S_K$ previously determined from the desired focus shift $S_F$ in beam direction.

**28.** The method according to any of claims 26 or 27, **characterized in that** the movably mounted collimator 50 is shifted via linear drive 52 by a path $S_K$ which corresponds to the desired focus shift $S_F$ in beam direction divided by the square of the magnification M, said magnification M being defined by the focal length ratio $f_O/f_K$, according to the formula $S_K = S_F/M^2$.

**29.** The method according to any of claims 26 to 28, **characterized in that** an electronic control unit calculates the change in focus position caused by absorption of laser radiation in the optical elements and therefrom calculates corrected values for adjusting the drives, especially the collimator drive, so that the laser focus can reach and retain the desired position.

**Revendications**

**1.** Dispositif pour le traitement de matériau à distance au laser composé d'un collimateur (50) de focale $f_K$ (81), qui collimate le faisceau laser (90) sortant d'une fibre de guidage de lumière (11), d'un système de déviation avec au moins un miroir (20, 30) logé de façon rotative et un entraînement (22, 32) pour le réglage d'angle du miroir (20, 30), et d'un objectif de focalisation (70) de focale $f_0$ (82), qui focalise le faisceau laser collimaté et dévié par le système de miroir, **caractérisé en ce que**

a. le collimateur (50) est logé de façon mobile au moyen d'un guidage linéaire (51) le long de l'axe du faisceau de telle sorte que la position du foyer du laser n'est plus limitée à un plan, mais convient pour la description d'une trajectoire dans l'espace, et **en ce que**
b. la distance moyenne entre le collimateur (50) et l'objectif de focalisation (70) est choisie de telle sorte que la distance globale $S_G$ entre l'extrémité de la fibre de guidage de lumière et le foyer le long de l'axe du faisceau se situe dans la plage de $2,01^*(f_K+f_0) < S_G < 2,14^*(f_K+f_0)$ lorsque le collimateur (50) n'est pas déplacé.

**2.** Dispositif selon la revendication 1, **caractérisé en ce que** le déplacement de course $S_K$ du collimateur (50) logé de façon mobile se trouve dans un rapport défini avec le déplacement de foyer $S_F$ souhaité dans le sens du faisceau par un entraînement linéaire (52).

**3.** Dispositif selon l'une quelconque des revendications 1 ou 2, **caractérisé en ce que** le collimateur (50) logé de façon mobile peut être déplacé par un entraînement linéaire (52) d'une course $S_K$ qui correspond au déplacement de foyer $S_F$ souhaité dans le sens du faisceau divisé par le carré de l'agrandissement M, l'agrandissement M étant défini par le rapport des focales $f_0/f_K$, exprimé par la formule $S_K = S_F/M^2$.

**4.** Dispositif selon l'une quelconque des revendications 1 à 3, **caractérisé en ce que** le système de déviation est constitué de deux miroirs de renvoi (20, 30), dont les axes de rotation (21, 31) sont disposés l'un par rapport à l'autre à 90°, et qui sont mus par des entraînements galvanométriques (22, 32).

**5.** Dispositif selon l'une quelconque des revendications 1 à 4, **caractérisé en ce que** le système de déviation se compose uniquement d'un miroir de renvoi (20, 30), qui est suspendu sur trois axes au moyen de paliers de rotation et paliers longitudinaux combinés comprenant chacun un entraînement linéaire (52) par axe de telle sorte que le miroir peut être basculé au moyen des entraînements linéaires (52) dans deux directions indépendantes l'une de l'autre.

6. Dispositif selon l'une quelconque des revendications 1 à 5, **caractérisé en ce qu'**au moins un autre miroir (40) fixe est présent entre le collimateur (50) et le système de déviation.

7. Dispositif selon la revendication 6, **caractérisé en ce que** le miroir (40) fixe réfléchit le rayonnement laser, mais transmet au moins une partie du spectre de lumière visible, et **en ce que** cette lumière est présentée au moyen d'un objectif de reproduction (60) sur une caméra CCD (61).

8. Dispositif selon la revendication 7, **caractérisé en ce que** la trajectoire du faisceau de la caméra peut être déviée au moyen d'un autre miroir de déviation (41) parallèlement au faisceau laser collimaté et **en ce que** l'objectif de reproduction (60) est logé de façon mobile dans la direction axiale et est couplé avec le mouvement du collimateur (50).

9. Dispositif selon la revendication 8, **caractérisé en ce que** la focale $f_A$ de l'objectif de reproduction (60) peut être choisie identique à la focale de collimateur $f_K$ pour la caméra CCD (61).

10. Dispositif selon l'une quelconque des revendications 1 à 9, **caractérisé en ce que** le contrôle des entraînements du collimateur (50) et des miroirs de déviation (20, 30) s'effectue par une unité de commande électronique, qui reçoit par une interface les coordonnées cibles pour le foyer du laser d'une commande hiérarchiquement supérieure.

11. Dispositif selon la revendication 10, **caractérisé en ce que** l'unité de commande électronique calcule les courses de commande nécessaires des entraînements à partir des coordonnées cibles pour le foyer de laser et contrôle les entraînements en conséquence.

12. Dispositif selon la revendication 11, **caractérisé en ce que** l'unité de commande électronique convient pour compenser lors du calcul des courses de commande d'entraînement des distorsions qui résultent de la géométrie de déviation du faisceau et de la focalisation.

13. Dispositif selon la revendication 11 ou 12, **caractérisé en ce que** le dispositif convient pour le mode de réglage avec un laser pilote visible, le contrôle des entraînements étant alors modifiée d'une petite valeur pour compenser des défauts chromatiques de la focalisation.

14. Dispositif selon l'une quelconque des revendications 1 à 13, **caractérisé en ce que** l'unité de commande électronique traite des informations sur la puissance de laser respectivement utilisée.

15. Dispositif selon la revendication 14, **caractérisé en ce que** l'unité de commande électronique reçoit les informations sur la puissance de laser actuellement utilisée par l'intermédiaire d'une interface de l'appareil laser ou de la commande hiérarchiquement supérieure.

16. Dispositif selon la revendication 14, **caractérisé en ce que** la tête de traitement présente un capteur intégré, qui mesure la puissance de laser actuellement utilisée et transmet la valeur mesurée à l'unité de commande.

17. Dispositif selon la revendication 16, **caractérisé en ce que** le capteur intégré dans la tête de traitement est une photodiode.

18. Dispositif selon la revendication 17, **caractérisé en ce que** la photodiode est disposée derrière le miroir de renvoi (40).

19. Dispositif selon l'une quelconque des revendications 14 à 18, **caractérisé en ce que** l'unité de commande électronique convient pour le calcul de la variation de la position du foyer, causée par l'absorption du rayonnement laser dans les éléments optiques, et convient pour le calcul des valeurs de correction pour le réglage des entraînements, en particulier de l'entraînement du collimateur, pour que le foyer du laser atteigne et conserve la position souhaitée.

20. Dispositif selon l'une quelconque des revendications 1 à 19, **caractérisé en ce qu'**un verre de protection échangeable est disposé entre le câble de guidage de lumière et le collimateur (50).

21. Dispositif selon la revendication 20, **caractérisé en ce que** le verre de protection est fabriqué à base de verre de quartz ou de saphir et présente un revêtement réduisant les réflexions.

22. Dispositif selon l'une quelconque des revendications 1 à 21, **caractérisé en ce qu'**un faisceau laser pilote visible est intégré dans la trajectoire du faisceau par un diviseur de faisceau.

23. Dispositif selon l'une quelconque des revendications 1 à 21, **caractérisé en ce qu'**un diviseur de faisceau est disposé de telle sorte qu'il injecte au moins deux faisceaux laser pilote visibles dans la trajectoire de faisceau, qui sont déplacés parallèlement à l'axe optique et sont disposés de façon symétrique autour de l'axe optique et sont réglés de telle sorte que les points de foyer de ces faisceaux se superposent sur la position du foyer du laser de puissance.

**24.** Dispositif selon la revendication 22, **caractérisé en ce que** les deux faisceaux laser pilote peuvent être enclenchés alternativement, avec une fréquence de rythme comprise entre 1 Hz et 20 Hz.

**25.** Dispositif selon l'une quelconque des revendications 22 à 24, **caractérisé en ce que** le miroir (40) est utilisé pour l'intégration des faisceaux laser pilote.

**26.** Procédé pour le traitement du matériau à distance au laser, dans lequel le faisceau laser (90) sortant d'une fibre de guidage de lumière (11) est collimaté au moyen d'un collimateur (50) de focale $f_K$ (81), et le faisceau laser collimaté et dévié par le système de miroir est focalisé au moyen d'un système de déviation comprenant au moins un miroir (20, 30) logé de façon rotative et un entraînement (22, 32) pour le réglage d'angle du miroir ainsi qu'au moyen d'un objectif de focalisation (70) de focale $f_0$ (82), **caractérisé en ce que** le collimateur est déplacé au moyen d'un guide linéaire (51) et d'un entraînement le long de l'axe de faisceau afin de positionner le foyer du laser dans l'axe z avec une grandeur de foyer constante et le foyer du laser est déplacé sur une trajectoire dans l'espace, la distance globale $S_G$ entre la pointe de la fibre de guidage de lumière et le foyer le long de l'axe du faisceau se situant dans la plage de $2,01 *(f_K+f_0) < S_G < 2,14*(f_K+f_0)$ lorsque le collimateur (50) n'est pas déplacé.

**27.** Procédé selon la revendication 26, **caractérisé en ce que** le collimateur (50) logé de façon mobile est déplacé par un entraînement linéaire (52) d'une course ($S_K$) qui a été déterminée auparavant à partir du déplacement du foyer $S_F$ souhaité dans la direction du faisceau.

**28.** Procédé selon l'une quelconque des revendications 26 ou 27, **caractérisé en ce que** le collimateur (50) logé de façon mobile est déplacé par un entraînement linéaire (52) d'une course $S_K$ qui correspond au déplacement de foyer $S_F$ souhaité dans le sens du faisceau divisé par le carré de l'agrandissement M, l'agrandissement M étant défini par le rapport de focales $f_0/f_K$, selon la formule $S_K = S_F/M^2$.

**29.** Procédé selon l'une quelconque des revendications 26 à 28, **caractérisé en ce que** la variation de la position du foyer est calculée par une unité de commande électronique, laquelle variation est provoquée par l'absorption du rayonnement laser dans les éléments optiques et **en ce que** des valeurs de correction sont calculées à partir de là pour le réglage des entraînements, en particulier de l'entraînement du collimateur, pour que le foyer du laser atteigne et conserve la position souhaitée.

**Figur 1**

**Figur 2**

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10343080 A1
- JP 11058059 A

- US 4997250 A